# EUROPEAN PATENT APPLICATION

(11) **EP 3 135 159 A1**
(43) Date of publication of application: **01.03.2017**
(21) Application number: 15782521.7
(22) Date of filing: 23.04.2015
(51) Int. Cl.: A47J 19/00

(54) **RAPID AND AUTOMATIC FEEDING SQUEEZE TYPE JUICE EXTRACTOR**

(30) Priority: 24.04.2014 CN 201410167695; 18.03.2015 CN 201520152370 U; 18.03.2015 CN 201510117862
(71) Applicant: Joyoung Company Limited, Shandong 250118 (CN)
(72) Inventor: WANG, Xuning, Jinan Shandong 250118 (CN); WEI, Yunjie, Jinan Shandong 250118 (CN); WANG, Lijun, Jinan Shandong 250118 (CN); ZHANG, Yuyin, Jinan Shandong 250118 (CN)
(74) Representative: V.O.
(86) International application number: PCT/CN2015/077273
(87) International publication number: WO 2015/161815

(57) **Abstract**

A rapid and automatic feeding squeeze type juice extractor comprises a base (1), a motor (6) arranged in the base (1), a driving unit arranged in the base, an extrusion screw rod (2), a squeezing assembly matched with the extrusion screw rod (2) to extrude materials and a feeding assembly (7); the squeezing assembly comprises a squeezing cavity (4); a feeding opening (46) is formed in the lateral wall of the squeezing cavity (4); the feeding assembly (7) comprises a feeding channel (71) communicated with the feeding opening (46); the juice extractor further comprises a material pushing part (221) for guiding the materials downwards; the material pushing part (221) is arranged corresponding to the feeding opening (46) of the squeezing cavity (4). The structure allows for rapid and automatic feeding through an opening having a large diameter.

## Description

This application claims the benefit of priorities to Chinese Patent Application No. 201410167695.2 titled "RAPID AND AUTOMATIC FEEDING SQUEEZE JUICER", filed with the Chinese State Intellectual Property Office on April 24, 2014, Chinese Patent Application No. 201520152370.7 titled "VERTICAL SQUEEZE JUICER WITH SCREW ROD", filed with the Chinese State Intellectual Property Office on March 18, 2015, and Chinese Patent Application No. 201510117862.7 titled "VERTICAL SQUEEZE JUICER WITH SCREW ROD ", filed with the Chinese State Intellectual Property Office on March 18, 2015, the entire disclosures of which are incorporated herein by reference.

### FIELD

The present application relates to a food processing machine, and particularly to a household squeeze juicer.

### BACKGROUND

There are two types of conventional vertical squeeze juicers.

A first type is a juicer disclosed in Patent No. CN200780001269.X, including a cover, a housing, a screw rod, a mesh barrel cooperating with the screw rod, a rotating brush and a driving unit. One side of the cover is provided with a feeding opening. This type of juicer addresses an issue of extracting juices with different concentrations by utilizing the characteristic that liquid flows downwards, and also has a good stability by arranging a base at the bottom. However, in this solution, the feeding opening is arranged above the screw rod, thus when a material enters the housing, it falls at a position above a spiral of the screw rod, thus is not easy to be fed in. Further, if the material falls at a position close to an axis of the screw rod, since the rotational speed of the screw rod at the position of the axis is zero, the material is fed slowly, and may also be accumulated, thus affecting squeezing and crushing in a next step. In addition, this structure can hardly achieve feeding through an opening having a large diameter.

A second type is a juicer disclosed in Patent No. 201310175466.0, in this solution, a bottom area of a feeding opening is located in an offset manner in a semi-circular area of a circle, and the diameter of this circle corresponds to the diameter of a pressing process portion and the center of the circle is a central axis of a spiral, that is, the feeding opening is made to have a diameter at least greater than 40mm by offsetting the feeding opening. This solution, though, addresses the issue that the material falls at the position of the axis and addresses in a certain degree the issue of the diameter of the feeding opening, a recess is required to be provided at the bottom of a cover body, and thus the shape of the feeding opening is irregular, that is, the dimension of the feeding opening from a spout to the bottom is reduced. A defect of the solution is that it is only adapted to extract juice of a spherical material, such as an apple or a tomato, and when extracting juice of a thick bar-shaped material such as a carrot or a cucumber, the material is apt to be stuck. Therefore, the solution has a poor adaptability to diversity of materials, and the juicer of this solution has a great manufacturing difficulty. Further, since its feeding opening is also arranged above the screw rod, though the feeding smoothness is somewhat improved, it still cannot realize automatic feeding.

Therefore, whether it is the first type of vertical screw squeeze juicer with an opening having a small diameter, or the second type of vertical screw squeeze juicer which can feed material through an opening having a large diameter, their feeding openings are both arranged above the screw rods, even though the feeding opening is arranged offset from the center, due to the limited space, some materials may still fall at positions close to the center of the screw rod, and parts of materials are still not easily nipped by the spiral, resulting in a slow feeding and a low processing efficiency. Furthermore, the screw rod of each of the juicers cuts off the material mainly by radial forces of material cutting ribs, thus generating a large torque, and increasing a working load of a motor, which may still cause an issue that materials are apt to be stuck.

### SUMMARY

For addressing the above technical issues, a squeeze juicer is provided according to the present application which can feed a material rapidly and automatically, and other than feeding rapidly and automatically, the structure of the juicer can also realize feeding through an opening having a large diameter.

The present application is implemented by the following specific technical solutions.

A rapid and automatic feeding squeeze juicer includes a base, a motor and a driving unit both arranged in the base, a squeezing screw rod, a crushing assembly cooperating with the squeezing screw rod to squeeze a material, and a feeding assembly. The crushing assembly is mounted on the base, the crushing assembly includes a crushing chamber, the crushing chamber is provided with a juice outlet and a residue outlet, and the squeezing screw rod includes a screw rod shaft and a screw rod body, the screw rod body includes a squeezing portion, the squeezing portion is provided with a squeezing spiral, the crushing chamber is sleeved on the squeezing screw rod, and the motor is drivably connected to the screw rod shaft via a transmission mechanism. The crushing chamber is provided with a feeding opening, and the screw rod body further includes a material propelling portion configured to guide the material downwards, the material propelling portion is arranged corresponding to the feeding opening, and the feeding assembly includes a feeding channel connected to the feeding opening, an included angle a is formed between a connecting line of geometrical centers of two end openings of the feeding channel and a vertical plane, and 0 degree≤a≤80 degrees.

Further, the feeding channel is a straight round tube, and the included angle a meets a condition that 30 degrees≤a≤60 degrees.

Further, the crushing chamber includes a crushing chamber body, a crushing chamber upper cover, and the feeding opening is arranged in an upper part of the crushing chamber body.

The crushing chamber may further be embodied as the following structure. The crushing chamber includes a crushing chamber body and a crushing chamber upper cover, and the crushing chamber upper cover is provided with a receiving portion protruding upwards and configured to receive an upper part of the squeezing screw rod, the feeding opening and the feeding channel connected to the feeding opening are arranged in a side wall of the receiving portion, and the material propelling portion is arranged corresponding to the feeding opening of the receiving portion, and a ratio of an equivalent diameter of the feeding opening to an equivalent diameter of the receiving portion ranges from 2/3 to 4/3. Further, the crushing chamber further includes a crushing chamber lower cover, and the crushing chamber lower cover is integrally formed with the crushing chamber body, the residue outlet is arranged in a bottom of the crushing chamber lower cover, and the crushing chamber lower cover is provided with a juice discharging channel, the juice outlet is arranged at a lower end of the crushing chamber body, and the juice discharging channel is in communication with the juice outlet.

Or, the crushing chamber may further be embodied as the following structure. The crushing chamber includes an upper crushing chamber configured to receive the material propelling portion and a lower crushing chamber configured to receive the squeezing portion, the upper crushing chamber and the lower crushing chamber are detachably connected, and the upper crushing chamber includes an upper crushing chamber body and a crushing chamber upper cover, and the feeding opening and the feeding channel connected to the feeding opening are arranged in a side wall of the upper crushing chamber body, the material propelling portion is arranged corresponding to the feeding opening of the upper crushing chamber body, and a ratio of an equivalent diameter of the feeding opening to an equivalent diameter of the upper crushing chamber body ranges from 2/3 to 4/3. Further, the crushing chamber upper cover is integrally formed with the upper crushing chamber body, the crushing chamber further includes a crushing chamber lower cover, the residue outlet is arranged in a bottom of the crushing chamber lower cover, the crushing chamber lower cover is provided with a juice discharging channel, and the juice outlet is arranged at a lower end of the lower crushing chamber, and the juice discharging channel is in communication with the juice outlet.

Further, the material propelling portion is a propelling spiral provided on the screw rod body, and a ratio of a screw pitch of the propelling spiral to an equivalent diameter of the feeding opening ranges from 1/2 to 3/2.

Further, the feeding channel includes an upper end opening and a lower end opening, and the lower end opening is connected to the feeding opening in the crushing chamber body, and a feeding channel cover is provided at the upper end opening.

Further, the feeding assembly further includes an auxiliary feeding opening arranged in the feeding channel cover and having a diameter ϕ, and ϕ≤45mm. Or, the feeding assembly further includes an auxiliary feeding opening arranged in the crushing chamber upper cover and having a diameter ϕ, and ϕ≤45mm.

Further, the crushing assembly further includes a squeezing cylinder, and the squeezing cylinder is arranged in the crushing chamber body, and an inner wall of the squeezing cylinder is provided with squeezing ribs cooperating with the squeezing spiral.

Further, the crushing assembly further includes a filtering portion, and the filtering portion is a filtering meshes arranged in the squeezing cylinder or filtering grid bars arranged in the squeezing cylinder.

In the present application, the "equivalent diameter of the feeding opening" refers to a diameter of a maximum inscribed circle of the feeding opening; the "equivalent diameter of the upper crushing chamber body" refers to a diameter of a maximum inscribed circle of the upper crushing chamber body. The "equivalent diameter of the receiving portion" refers to a diameter of a maximum inscribed circle of the receiving portion.

The present application has the following beneficial effects.

According to the present application, the feeding opening and the feeding channel are arranged on the crushing chamber, and the material propelling portion is arranged corresponding to the feeding opening of the crushing chamber, thus a material can directly enter the crushing chamber rapidly via the feeding channel by its own gravity, and can be rapidly brought into a clearance formed between the squeezing spiral and the crushing chamber under the guiding action of the material propelling portion at the position corresponding to the feeding opening, to be squeezed, thus easily achieving rapid and automatic feeding. Since the included angle a between the connecting line of the centers of the two end openings of the feeding channel and the vertical plane is in a range of 0 degree≤a≤80 degrees, the material forms the same included angle with respect to the axis of the screw rod, thus under the action of its own gravity and the included angle between the feeding channel and the vertical plane, the material more easily automatically enters the crushing chamber body and the material propelling portion of the squeezing screw rod arranged at the position corresponding to the feeding opening. Due to the included angle a, an impact force applied by the material to the squeezing screw rod is resolved into an axial force and a horizontal force, and the squeezing force applied by the material to the squeezing screw rod in the spiral direction of the squeezing screw rod is reduced, which reduces the torque of the motor, and effectively reduces the load of the motor, thereby not only allowing a smooth feeding, but also allowing the motor to operate stably and have a long service life. Further, the material is crushed by the propelling spiral, and is rapidly brought into the clearance between the squeezing spiral and the crushing chamber body by the propelling spiral, to squeeze the material to extract juice.

In addition, since the feeding opening is arranged in the crushing chamber, the size of the diameter of the feeding opening and the position of the feeding opening are not affected by the size of the diameters of the squeezing screw rod and the crushing chamber upper cover, it can easily achieve feeding through an opening having a large diameter. Further in the case that the feeding opening is embodied as an opening having a large diameter, since the included angle a is formed between the connecting line of the geometric centers of the two end openings of the feeding channel and a vertical plane, and 0 degree≤a≤80 degrees, it is equivalent to place the material obliquely, thus effectively preventing the hand of a person from extending into the feeding channel too deep, and also allowing the feeding channel to be lengthened with respect to a pipe vertically arranged, therefore, the safety of the product is higher, and the product has a simple structure, and is easy to machine. In the case that the included angle a is greater than 80 degrees, the feeding channel is too gentle, and the friction between the material and the feeding channel is large, which is not good for rapid feeding, and reduces the juice extraction efficiency.

In the case that the feeding channel is a straight round tube, and the included angle a meets the condition of 30 degrees≤a≤60 degrees, the automatic feeding has a better effect, and the load of the motor is less and is more stable. The feeding channel is arranged at an upper part of the crushing chamber, which better facilitates the feeding and squeezing of the material. In the case that the included angle a is less than 30 degrees, though the material can rapidly fall in, the material is close to the center of the squeezing screw rod when reaching the lower end opening, and the squeezing screw rod has a small rotational speed and is subjected to a large torque at the center, thus it is not good for nipping and primarily crushing the material.

The feeding assembly further includes an auxiliary feeding opening. The opening of the feeding channel is further provided with a feeding channel cover, and the auxiliary feeding opening is arranged in the feeding channel cover, the diameter of the auxiliary feeding opening is ϕ, and ϕ≤45mm; or, the auxiliary feeding opening is arranged in the crushing chamber upper cover, the diameter of the auxiliary feeding opening is ϕ, and ϕ≤45mm. In this way, not only the requirements imposed by safety regulations on the dimension of the diameter of the opening are met, but also the material is allowed to be fed at any time. For a large sized material, it may be feed through the feeding channel, and then the feeding channel cover is closed, and the machine is started to extract juice, and then a small sized material may be fed through the auxiliary feeding opening in the feeding channel cover or the crushing chamber upper cover without opening the cover and stopping the machine, which is convenient and practical for making mixed juice with various sized materials. For squeezing a hard material such as a carrot, a potato, or a sweet potato, the hard material can be fed from the auxiliary feeding opening in the crushing chamber upper cover. With such a structure, not only the squeezing and the juice extracting are more fully performed, but also the crushed potato pulp, carrot pulp, and sweet potato pulp are finer, thus facilitating a customer using the pulps as food ingredient.

In the case that the juicer is used to squeeze a nut type material for example, walnuts or peanuts, to mix the material with a fruit to make a juice containing nut granules, it may employ the squeezing cylinder without a filtering mesh to cooperate with the squeezing screw rod to make the juice. The nuts are fed from the auxiliary feeding opening of the feeding channel cover, meanwhile the squeezing clearance is adjusted, and the materials can be directly crushed without stopping the machine and can be crushed into nut granules meeting the requirement of granular feeling. Later, the crushed walnut granules, peanut granules or the like are placed into a cup containing the squeezed juice, thus facilitating making a mixed drink. In addition, the structure, in which the squeezing cylinder and the squeezing screw rod cooperate to squeeze, can be used to make ice creams with fruit granules.

The material propelling portion is the propelling spiral arranged on the screw rod body. The material propelling portion of the squeezing screw rod is configured to guide the material downwards. The propelling spiral snaps the material to primarily crush the material and then brings the material rapidly into a clearance formed between the squeezing and grinding part and the lower crushing chamber along the propelling spiral, to be squeezed to extract juice. The ratio of the screw pitch of the propelling spiral to the equivalent diameter of the feeding opening ranges from 1/2 to 3/2. The material can smoothly enter the propelling spiral after passing through the feeding channel, and can be snapped by the propelling spiral and brought downwards by the propelling spiral along the propelling spiral into the clearance formed between the squeezing spiral and the crushing chamber, to be squeezed to extract juice, thus achieving rapid juice extracting. In the case that the ratio of the screw pitch of the propelling spiral to the equivalent diameter of the feeding opening is less than 1/2, the material cannot smoothly enter the propelling spiral after passing through the feeding channel, further, a relatively small screw pitch may cause that the material cannot be rapidly brought into the squeezing spiral, thus adversely affecting the juice extraction efficiency. In the case that the ratio is greater than 3/2, the material is small relative to the screw pitch, and is not easy to be snapped, thus the purpose of pre-crushing cannot be achieved.

### BRIEF DESCRIPTION OF THE DRAWINGS

Embodiments of the present application are further described in detail hereinafter in conjunction with drawings.
Figure 1 is a structural view of a first embodiment of a rapid and automatic feeding juicer according to the present application;
Figure 2 is a schematic view showing the structures of a feeding channel and a crushing chamber in Figure 1;
Figure 3 is a schematic view showing the structure of a squeezing cylinder in Figure 1;
Figure 4 is a schematic view showing the structure of a squeezing screw rod in Figure 1;
Figure 5 is a structural view of a second embodiment of the rapid and automatic feeding juicer according to the present application;
Figure 6 is a schematic view showing the structure of a squeezing cylinder in Figure 5;
Figure 7 is a structural view of a third embodiment of the rapid and automatic feeding juicer according to the present application;
Figure 8 is a schematic view showing the structure of a squeezing cylinder and a wall brush component in Figure 7 being assembled together;
Figure 9 is a schematic view showing a feeding channel and a crushing chamber of a fourth embodiment of the rapid and automatic feeding juicer according to the present application;
Figure 10 is a structural view of a squeezing cylinder of the fourth embodiment of the rapid and automatic feeding juicer according to the present application;
Figure 11 is a schematic view showing a feeding channel and a crushing chamber of a fifth embodiment of the rapid and automatic feeding juicer according to the present application;
Figure 12 is a schematic view showing the structure of a sixth embodiment of the rapid and automatic feeding juicer according to the present application;
Figure 13 is a schematic view showing the structure of a squeezing screw rod in Figure 12;
Figure 14 is a schematic view showing the structure of an alternative solution of the squeezing screw rod in Figure 12;
Figure 15 is a schematic view showing the structure of a seventh embodiment of the rapid and automatic feeding juicer according to the present application; and
Figure 16 is a schematic view showing the structure of a tenth embodiment of the rapid and automatic feeding juicer according to the present application.

**Reference Numerals:**

| | | | |
|---|---|---|---|
| 1 | base, | 2 | squeezing screw rod, |
| 21 | screw rod shaft, | 210 | upper rotating shaft, |
| 211 | rotating shaft positioning step, | 22 | screw rod body, |
| 221 | material propelling portion, | 222 | squeezing portion, |
| 223 | propelling spiral, | 224 | squeezing spiral, |
| 3 | squeezing cylinder, | 31 | squeezing rib, |
| 4 | crushing chamber, | 41 | juice outlet, |
| 42 | residue outlet, | 43 | crushing chamber body, |
| 431 | upper opening, | 432 | lower opening, |
| 44 | crushing chamber upper cover, | 440 | receiving portion, |
| 4400 | rotating plug, | 4401 | rotating shaft hole, |
| 441 | positioning step, | 4410 | rotating shaft hole, |
| 45 | crushing chamber lower cover, | 451 | juice discharging channel, |
| 46 | feeding opening, | 47 | upper crushing chamber, |
| 470 | upper crushing chamber body, | 471 | crushing chamber upper cover, |
| 48 | lower crushing chamber, | 5 | filtering portion, |
| 51 | filtering mesh, | 52 | filtering grid bar, |
| 6 | motor, | 7 | feeding assembly, |
| 71 | feeding channel, | 711 | upper end opening, |
| 712 | lower end opening, | 713 | connecting segment, |
| 714 | feeding segment, | 72 | feeding channel cover, |
| 73 | auxiliary feeding opening, | 8 | rotating wall brush component, |
| 81 | wall brush holder, | 82 | soft wall brush, and |
| 10 | material. | | |

### DETAILED DESCRIPTION

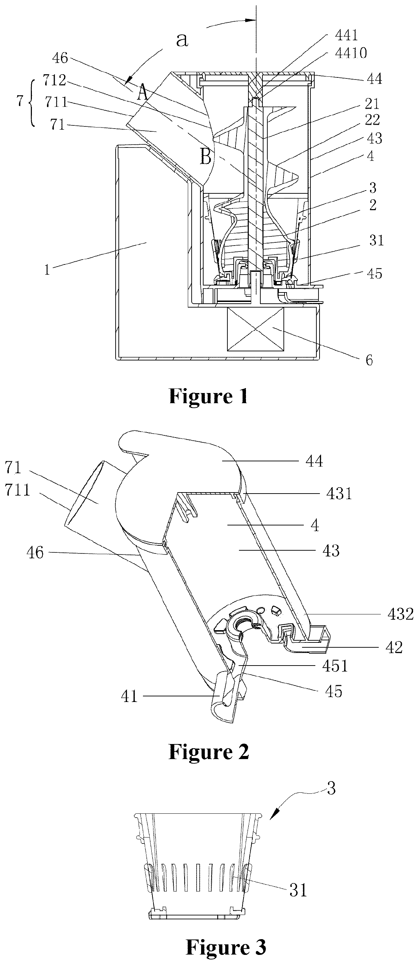

A rapid and automatic feeding squeeze juicer as shown in Figures 1 to 16 includes a base 1, a motor 6 and a driving unit (not illustrated) both arranged in the base 1, a squeezing screw rod 2, and a crushing assembly cooperating with the squeezing screw rod 2 to squeeze a material, and a feeding assembly 7. The crushing assembly is mounted on the base 1, and includes a crushing chamber 4, and the crushing chamber 4 is provided with a juice outlet 41 and a residue outlet 42. The squeezing screw rod 2 includes a screw rod shaft 21 and a screw rod body 22, and the screw rod body 22 includes a material propelling portion 221 configured to guide the material downwards and a squeezing portion 222. The material propelling portion 221 is provided with a propelling spiral 223, and the squeezing portion 222 is provided with a squeezing spiral 224. The crushing chamber 4 is sleeved on the squeezing screw rod 2, and the motor 6 is drivably connected to the screw rod shaft 21 via a transmission mechanism (not illustrated). The crushing chamber 4 is provided with a feeding opening 46. The feeding assembly 7 includes a feeding channel 71 in communication with the feeding opening, and the feeding channel 71 includes an upper end opening 711 and a lower end opening 712. The material propelling portion 221 is arranged corresponding to the feeding opening 46 of the crushing chamber 4. Geometric centers of two end openings of the feeding channel 71 are respectively A and B, and their connecting line is AB, an included angle between the line AB and a vertical plane is a, and 0 degree≤a≤80 degrees.

According to the present application, the feeding opening 46 and the feeding channel 71 are arranged on the crushing chamber 4, and the material propelling portion 221 is arranged corresponding to the feeding opening 46, thus a material can directly enter the crushing chamber 4 rapidly via the feeding channel 71 by its own gravity, and can be rapidly brought into a clearance formed between the squeezing spiral 224 and the crushing chamber 4 under the guiding action of the material propelling portion 221 at the position corresponding to the feeding opening, to be squeezed, thus easily achieving rapid and automatic feeding. Since the included angle a between the connecting line of the centers of the two end openings of the feeding channel and the vertical plane is in a range of 0 degree≤a≤80 degrees, the material forms the same included angle with respect to the axis of the screw rod, thus under the action of the included angle between the feeding channel and the vertical plane, the material 10 more easily automatically enters the crushing chamber 4 and the material propelling portion 221 of the squeezing screw rod 2 arranged at the position corresponding to the feeding opening 46 by its own gravity. An impact force applied by the material to the squeezing screw rod is resolved into an axial force and a horizontal force, and the squeezing force applied by the material 10 to the squeezing screw rod 2 in the direction of the squeezing spiral 224 is reduced, which reduces the torque of the motor, and effectively reduces the load of the motor Further, the material is crushed by the propelling spiral 223, and is rapidly brought into the clearance between the squeezing spiral and the crushing chamber, to allow juice to be rapidly and easily squeezed out. Therefore, this structure not only allows a rapid and smooth feeding, but also allows the motor to operate stably and have a long service life.

The above rapid and automatic feeding squeeze juicer is described in detail hereinafter with specific embodiments.

### First Embodiment

A first embodiment of the rapid and automatic feeding juicer according to the present application, as shown in Figures 1-4, includes a base 1, a motor 6 and a driving unit (not illustrated) both arranged in the base 1, a squeezing screw rod 2, and a crushing assembly cooperating with the squeezing screw rod 2 to squeeze a material, and a feeding assembly 7. The crushing assembly is mounted on the base 1, and includes a crushing chamber 4, and the crushing chamber 4 is provided with a juice outlet 41 and a residue outlet 42. The squeezing screw rod 2 includes a screw rod shaft 21 and a screw rod body 22, and the screw rod body 22 includes a material propelling portion 221 for guiding the material downwards and a squeezing portion 222. The material propelling portion 221 is provided with a propelling spiral 223, and the squeezing portion 222 is provided with a squeezing spiral 224. The crushing chamber 4 is sleeved on the squeezing screw rod 2, and includes a crushing chamber body 43, a crushing chamber upper cover 44 and a crushing chamber lower cover 45, and the motor 6 is drivably connected to the screw rod shaft 21 via a transmission mechanism (not illustrated). The crushing chamber upper cover 44 has a positioning step 441 protruding towards the interior of the crushing chamber 4, and the center of the positioning step 441 is provided with a rotating shaft hole 4410. An upper end of the screw rod shaft 21 has an upper rotating shaft 210, and the upper rotating shaft 210 may be inserted into the rotating shaft hole 4410, thus, the positioning step 441 can limit the position of the squeezing screw rod 2.

In this embodiment, the crushing chamber body 43 is a hollow cylinder, and a side wall of the crushing chamber body 43 is provided with a feeding opening 46, and the feeding opening 46 is located in an upper part of the crushing chamber body 43. A feeding channel 71 connected to the feeding opening 46 is a straight round tube, and is more convenient to clean. The feeding channel 71 includes an upper end opening 711 and a lower end opening 712, and the lower end opening 712 is connected to the feeding opening 46 of the crushing chamber body. The feeding channel 71 has an inner diameter of 45mm, and an included angle a between a connecting line AB of geometric centers of the two end openings of the feeding channel 71 and a vertical plane is 60 degrees, this angle ensures the smoothness of the downward movement of the material along the feeding channel, and ensures the smoothness of feeding. Further, the inner diameter of the feeding channel is 45mm, which fulfills the requirement of a safety regulation on dimensions of the diameter of the opening, and also ensures the physical safety of a customer. The material propelling portion 221 in this embodiment is provided with the propelling spiral 223, and the propelling spiral 223 is arranged along a screwing direction of the squeezing spiral 224. The propelling spiral 223 has an upper end arranged corresponding to the feeding opening 46 and a lower end extending downwards to the squeezing spiral 224. Since there is a certain included angle a between the feeding channel and the vertical plane, i.e., the crushing chamber body, under the actions of its own gravity of the material and the included angle, the material can rapidly enter the crushing chamber body, to come into contact with an upper part of the propelling spiral 223, or directly enter the propelling spiral 223, and then under the downward guiding action of the propelling spiral 223, the material is first snapped or cut into small pieces by the propelling spiral, and meanwhile, moves downwards automatically and rapidly till entering a squeezing clearance between the squeezing spiral and the crushing chamber, thus achieving the rapid juice extracting.

As shown in Figures 1 and 3, the crushing assembly further includes a squeezing cylinder 3, and the squeezing cylinder 3 is movably arranged in the crushing chamber body 43. The squeezing cylinder 3 is in the shape of a closed cylinder with a surrounding wall. An inner wall of the squeezing cylinder 3 is provided with a squeezing rib 31 configured to cooperate with the squeezing spiral 223 to crush the material. Multiple squeezing ribs 31 are provided, and are arranged symmetrically along a central axis of the squeezing cylinder 3. The squeezing cylinder is movably arranged, thus the squeezing cylinder is easy to detach and clean. Further, by providing the squeezing cylinder, the crushing chamber body is only used to collect the juice, and the squeezing cylinder and the squeezing screw rod are employed to squeeze out the juice, thus the crushing chamber body does not directly interact with the squeezing screw rod and is subjected to a small force, which ensures the service life of the crushing chamber. Further, the squeezing ribs are provided on the squeezing cylinder, thus ensuring that the crushing chamber is easier to clean.

A squeezing cylinder without a filtering mesh can cooperate with the squeezing screw rod to make juice or ice cream containing granules or fruit granules, and etc. In the case that the juicer is used to squeeze a nut type material, for example, walnuts or peanuts, to mix the material with a fruit to make a juice containing nut granules, the nuts or small pieces of fruit are fed from the upper end opening 71 of the feeding channel cover, meanwhile the squeezing clearance is adjusted to be large, and the materials can be directly crushed without stopping the machine and can be crushed into nut granules meeting the requirement of granular feeling. Since no filtering mesh is provided, the fruit residue is squeezed out through the residue outlet. Later, the crushed walnut granules, peanut granules or the like are placed into a cup containing the squeezed juice, thus facilitating making a mixed drink containing granules. Since no filtering portion is provided in the squeezing cylinder, this structure is more adapted to make fruit pulp, a mixture of fruit pulp and fruit granules, vegetable pulp, ice cream, and the like, and mixtures containing nut type food.

Of course, the squeezing cylinder of the juicer may also be integrally formed with the crushing chamber, that is, squeezing ribs are provided on an inner wall of the crushing chamber body, and a juice outlet is provided in the side wall of the crushing chamber body, and a filtering mesh is provided at the juice outlet, and a residue outlet is provided in the crushing chamber lower cover Though, the filtering effect and the cleaning difficulty of this structure are not as good as the previous solution, this solution reduces one part, and thus reducing a detaching and cleaning step. Simple structural variations without departing from this embodiment also fall into the scope of the present application, which are not illustrated in detail here.

As shown in Figure 2, the crushing chamber body 43 has an inner diameter of 45mm, and includes an upper opening 431 and a lower opening 432. The crushing chamber upper cover 44 is provided at the upper opening 431 of the crushing chamber body, and the crushing chamber lower cover 45 is provided at the lower opening 432 of the crushing chamber body. The crushing chamber upper cover 44 and the crushing chamber lower cover 45 of the are movably mounted at the upper opening 431 and the lower opening 432 of the crushing chamber body 43 respectively In this embodiment, the crushing chamber upper cover 44 and the crushing chamber lower cover 45 are movably mounted at the upper opening 431 and the lower opening 432 of the crushing chamber body 43 respectively by threaded connections. The crushing chamber upper cover 44 and the crushing chamber lower cover 45 are movably mounted to the crushing chamber body respectively, thus facilitating detaching the squeezing screw rod and cleaning the crushing chamber and the squeezing screw rod, and realizing a thorough cleaning. The residue outlet 42 is arranged in the bottom of the crushing chamber lower cover 45. The crushing chamber lower cover 45 is provided with a juice discharging channel 451, the juice outlet 41 is arranged at a lower end of the crushing chamber body 43, and the juice discharging channel 451 is in communication with the juice outlet 41, thus the juice can be discharged more smoothly.

Of course, the feeding channel according to this embodiment may also be configured in the shape of a bent round tube or a straight elliptic tube or the like; such variations of the shape of the tube without departing from the essence of the present application also fall into the scope of the present application.

### Second Embodiment

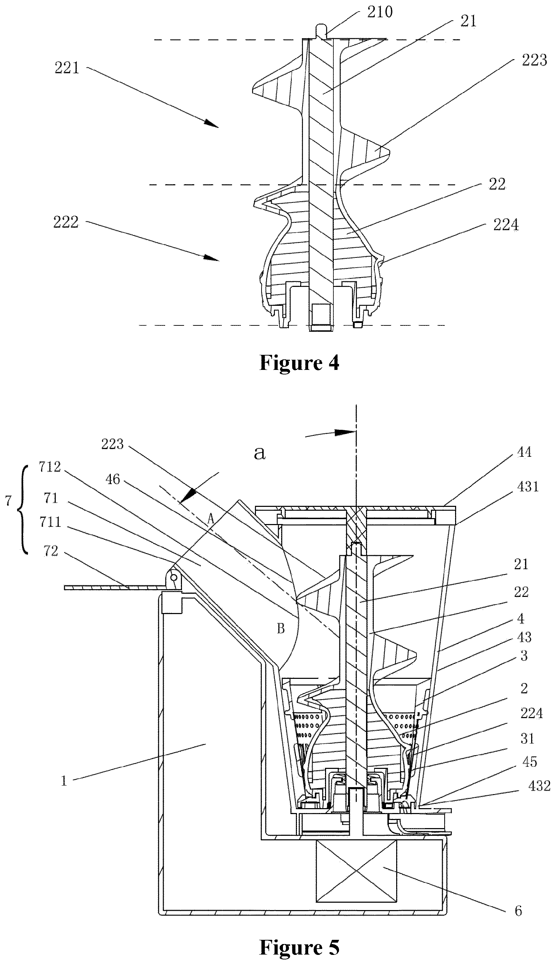

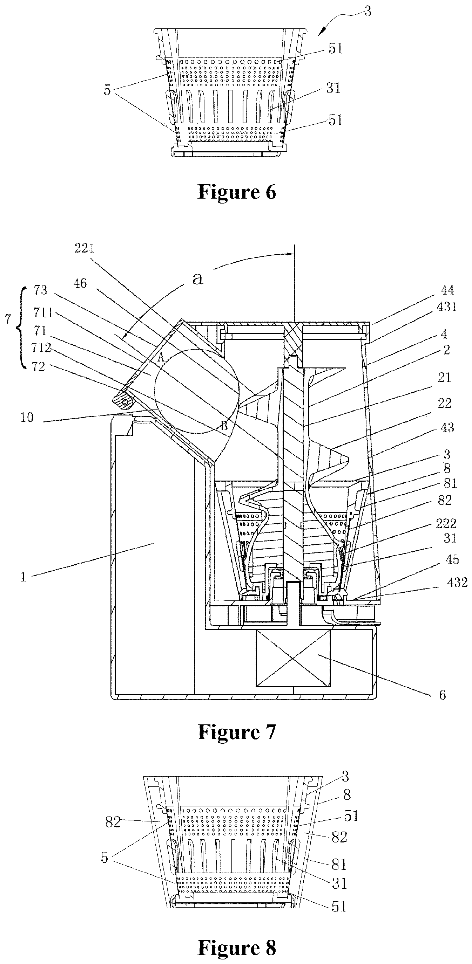

A second embodiment of the rapid and automatic feeding juicer according to the present application, as shown in Figures 5 and 6, includes a base 1, a motor 6 and a driving unit (not illustrated) both arranged in the base 1, a squeezing screw rod 2, and a crushing assembly cooperating with the squeezing screw rod 2 to squeeze a material, and a feeding assembly 7. The crushing assembly is mounted on the base 1, and includes a crushing chamber 4, and the crushing chamber 4 is provided with a juice outlet (not illustrated) and a residue outlet (not illustrated). The squeezing screw rod 2 includes a screw rod shaft 21 and a screw rod body 22, and the screw rod body 22 includes a material propelling portion 221 configured to guide a material downwards and a squeezing portion 222. The material propelling portion 221 is provided with a propelling spiral 223, and the squeezing portion 222 is provided with a squeezing spiral 224. The crushing chamber 4 is sleeved on the squeezing screw rod 2, and includes a crushing chamber body 43, a crushing chamber upper cover 44 and a crushing chamber lower cover 45, and the motor 6 is drivably connected to the screw rod shaft 21 via a transmission mechanism (not illustrated).

As shown in Figures 5 and 6, the crushing assembly further includes a squeezing cylinder 3 and filtering portions 5. The filtering portions 5 are embodied as filtering meshes 51 arranged in the squeezing cylinder, and the filtering portions 5 are arranged on the squeezing cylinder and spaced apart from each other. The filtering meshes 51 are distributed above and below a region where squeezing ribs 31 are located, thus not only ensuring the strength of the squeezing cylinder, but also facilitating the squeezed juice to flow out of the squeezing cylinder timely. The squeezing cylinder 3 is arranged in the crushing chamber body 43, and an inner wall of the squeezing cylinder 3 is provided with the squeezing ribs 31 cooperating with the squeezing spiral 224. A side wall of the crushing chamber body 43 is provided with a feeding opening 46, and a feeding channel 71 in communication with the feeding opening 46 is a straight round tube. Geometric centers of two end openings of the feeding channel are respectively A and B, their connecting line is AB, and an included angle a between the line AB and a vertical plane is 30 degrees, and a good feeding effect may be achieved by this angle. The propelling spiral 223 has an upper end arranged corresponding to the feeding opening 46, and a lower end extending downwards to the squeezing spiral 224. The feeding channel has an inner diameter of 80mm, which achieves feeding through an opening having a large diameter, thus a round material such as an apple or a tomato is not required to be cut into small pieces, and can be entirely placed into the feeding channel or can be cut into two halves at most to be placed into the feeding channel, and an elongated material such as a cucumber can be directly placed into the feeding channel. The material can smoothly enter the crushing chamber body along a slope of the feeding channel, and enter the propelling spiral 223 or come into contact with the propelling spiral 223. In this way, it is ensured that once the motor is started, the material (the whole material or large pieces of material) in contact with the propelling spiral 223 is rapidly snapped by the propelling spiral and enters into the propelling spiral. The material entered into the propelling spiral or the snapped material can be squeezed into small pieces by the combined action of the crushing chamber body and the propelling spiral, and is then rapidly conveyed by the propelling spiral to a clearance between the squeezing spiral 224 and the squeezing cylinder 3, to be squeezed. By the squeezing action of the squeezing ribs 31 provided on the squeezing cylinder 3 and the squeezing spiral 224, the material is crushed, and the juice flows out through the filtering meshes 51 of the squeezing cylinder 3, and flows downwards along the clearance between the crushing chamber body and the squeezing cylinder, to be discharged via the juice outlet, while the residue remains in the squeezing cylinder and is pushed downwards further to be discharged via the residue outlet, thus achieving the separation of the juice from the residue.

As shown in Figure 5, the feeding channel 71 includes an upper end opening 711 and a lower end opening 712, the lower end opening 712 is connected to the feeding opening 46 in the crushing chamber body, and the upper end opening 711 is provided with a feeding channel cover 72. The feeding channel cover 72 according to this embodiment is in an opened state, and the feeding channel cover 72 is hinged at the upper end opening 711 of the feeding channel 71. In this embodiment, the feeding channel has a large diameter, thus for fulfilling the safety regulations, the feeding channel cover 72 is provided on the feeding channel and a safety mechanism is arranged to ensure that the motor does not work when the feeding channel cover 72 is in an opened state, thus ensuring the physical safety of a customer.

As shown in Figure 5, unlike the crushing chamber in the first embodiment, in the crushing chamber in this embodiment, the crushing chamber upper cover 44 is movably mounted at an upper opening 431 of the crushing chamber body 43, and the crushing chamber lower cover 45 is integrally formed with the crushing chamber body 43. In this embodiment, the crushing chamber body 43 is in the shape of an inverted circular truncated cone with a wide upper part and a narrow lower part and a taper of 10 degrees. The crushing chamber lower cover 45 is welded at a lower opening 432 of the crushing chamber body 43 by ultrasonic welding. The crushing chamber upper cover 44 is arranged at the upper opening 431 of the crushing chamber body 43 by a threaded hinging structure. The crushing chamber body is in the shape of the inverted circular truncated cone with a wide upper part and a narrow lower part, which not only ensures that the squeezing screw rod 2 and the squeezing cylinder 3 can be conveniently mounted and taken out through the upper opening 431 of the crushing chamber body 43, but also facilitates cleaning the crushing chamber and its internal parts. Further, with the combination of the shape of the crushing chamber body 43 and the inclination angle of the feeding channel 71, the material entered into the crushing chamber can move downwards further by the guidance of an inclined surface of the crushing chamber body, and can more easily slide into the propelling spiral at the position corresponding to the feeding opening, thus the feeding is more smooth. The remaining structures of the crushing chamber and beneficial effects generated by them are identical to those of the crushing chamber in the first embodiment in Figure 2 and the beneficial effects generated by them, which are not described here in detail.

Of course, since the crushing chamber body 43 is in the shape of the inverted circular truncated cone with a wide upper part and a narrow lower part, an auxiliary feeding opening may be further provided in the crushing chamber upper cover 44. Such simple structural variations also fall into the scope of the present application, which are not listed here in detail.

### Third Embodiment

As shown in Figure 7, unlike the second embodiment, in a third embodiment of the rapid and automatic feeding juicer according to the present application, geometrical centers of two end openings of the feeding channel 71 are respectively A and B, their connecting line is AB, and an included angle a between the line AB and a vertical plane is 55 degrees. The feeding channel has an inner diameter of 70mm. The inclination degree and the size of the diameter of the feeding channel allow a good feeding effect. The juicer is further provided with an auxiliary feeding opening 73, and the auxiliary feeding opening 73 is arranged in the feeding channel cover 72. By providing the auxiliary feeding opening in the feeding channel cover, a material already cut into small pieces or small materials such as haws, grapes or apricots, can fed without stopping the machine and opening the cover. For making mixed juice of different sized materials, this embodiment is convenient and practical.

As shown in Figure 7, the crushing chamber upper cover 44 is integrally formed with the crushing chamber body 43, and the crushing chamber lower cover 45 is movably mounted on the crushing chamber body 43. In this embodiment, a longitudinal section of an upper part of the crushing chamber body 43 is in the shape of a circular truncated cone with a narrow upper part and a wide lower part, and a longitudinal section of a lower part is in a cylindrical shape. The crushing chamber upper cover 45 and the crushing chamber body 43 are integrally injection molded. The crushing chamber lower cover 45 is movably mounted at the lower opening 432 of the crushing chamber body 43 by a snap-fit structure. The crushing chamber body 43 is in the shape of the circular truncated cone with a narrow lower part and a wide upper part, and the crushing chamber lower cover 45 is movably mounted to the crushing chamber body 43, thus ensuring that the squeezing screw rod 2 and the squeezing cylinder 3 located in the crushing chamber body 43 can be taken out via the lower opening of the crushing chamber body to be cleaned, and facilitating cleaning the parts. Further, with the combination of the shape of the crushing chamber body and the angle of the feeding channel, the material entered into the crushing chamber can more conveniently enter into the propelling spiral 223 corresponding to the feeding opening 46 under the downward action of the inclined surface of the crushing chamber, thus the material can be more easily pushed into the clearance between the squeezing spiral 224 and the squeezing cylinder 3 to be crushed.

As shown in Figure 8, a rotating wall brush assembly 8 is further sleeved on the squeezing cylinder 3 of the juicer, and the rotating wall brush assembly 8 includes a wall brush holder 81 and a soft wall brush 82 arranged on the wall brush holder. The wall brush holder 81 is connected to the motor 6 by a transmission device (not illustrated), and the squeezing cylinder 3 is nested in the rotating wall brush holder 81, and the soft wall brush 82 is in line contact or surface contact with the filtering meshes 51. The soft wall brush 82 sweeps over the filtering meshes 51 continuously, thus damaging the surface tension action of the liquid and the filtering meshes 51, to enable the juice to flow out more smoothly and prevent the meshes from being blocked by the juice of soft fruits such as tomatoes.

The remaining structures of this embodiment and beneficial effects generated by them are identical to those of the second embodiment and the beneficial effects generated by them, which are not described here in detail.

Of course, the material propelling portion 221 in this embodiment may also be embodied as ribs arranged along the direction of the squeezing spiral, or the material propelling portion 221 may be configured as a thick cutting tool arranged along a spiral direction of the squeezing spiral, which can all meet the requirements of rapid feeding. Such simple structural variations without departing from the essence of the present application all fall into the scope of the present application, which are not described here in detail.

### Fourth Embodiment

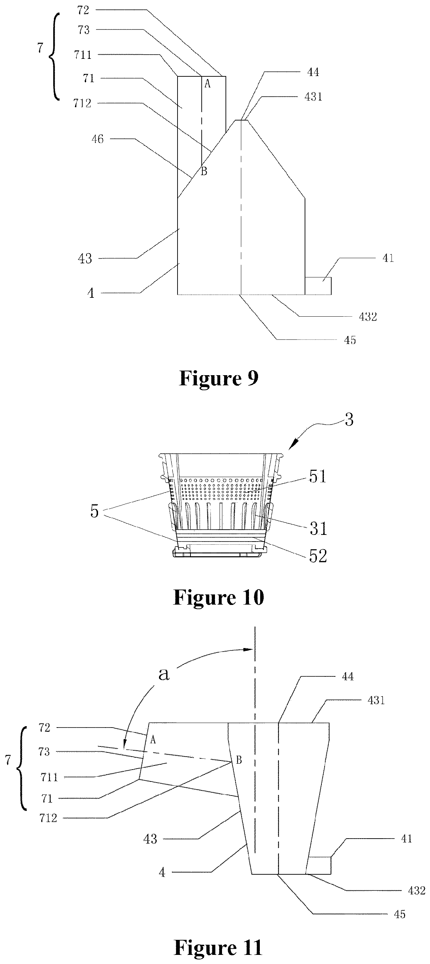

As shown in Figures 9 and 10, unlike the third embodiment, in a fourth embodiment of the rapid and automatic feeding juicer according to the present application, an upper part of the crushing chamber body 43 is in the shape of a hollow circular truncated cone, and a lower part of the crushing chamber body 43 is in a hollow cylindrical shape, and the feeding opening 46 is arranged in a conical surface of the crushing chamber body 43. Geometrical centers of two end openings of the feeding channel 71 are respectively A and B, their connecting line is AB, an included angle a between the line AB and a vertical plane is 0 degree, and the feeding channel 71 has an inner diameter of 60mm. As shown in Figure 10, the filtering portion 5 in this embodiment includes filtering meshes 51 arranged in the squeezing cylinder 3 above a region where squeezing ribs 31 are located and filtering grid bars 52 arranged in the squeezing cylinder 3 below the squeezing ribs 31. Each of the filtering grid bars 52 is in an annular shape, and is in an undulated shape. By adopting the filtering grid bars, a filtering clearance is provided between each two adjacent filtering grid bars, and juice flows out from the filtering clearances, and residue remains within the filtering grid bars and is discharged from the residue outlet in the crushing chamber lower cover, thus facilitating cleaning the squeezing cylinder. The rest structures of this embodiment and beneficial effects generated by them are identical to those of the third embodiment and the beneficial effects generated by them, which are not described here in detail.

### Fifth Embodiment

Unlike the second embodiment, in a fifth embodiment of the rapid and automatic feeding juicer according to the present application as shown in Figure 11, geometric centers of two end openings of the feeding channel 71 are respectively A and B, and their connecting line is AB, an included angle a between the line AB and a vertical plane is 80 degrees, and the feeding channel has a diameter of 35mm. The feeding channel is also in the shape of the hollow circular truncated cone with a small upper end opening and a large lower end opening. An included angle between the feeding channel 71 and the crushing chamber 4 is 35 degrees, which conforms to the shape of the crushing chamber 4, thus facilitating rapid and automatic feeding of the material. The rest structures of this embodiment and beneficial effects generated by them are identical to those of the second embodiment and the beneficial effects generated by them, which are not described here in detail.

### Sixth Embodiment

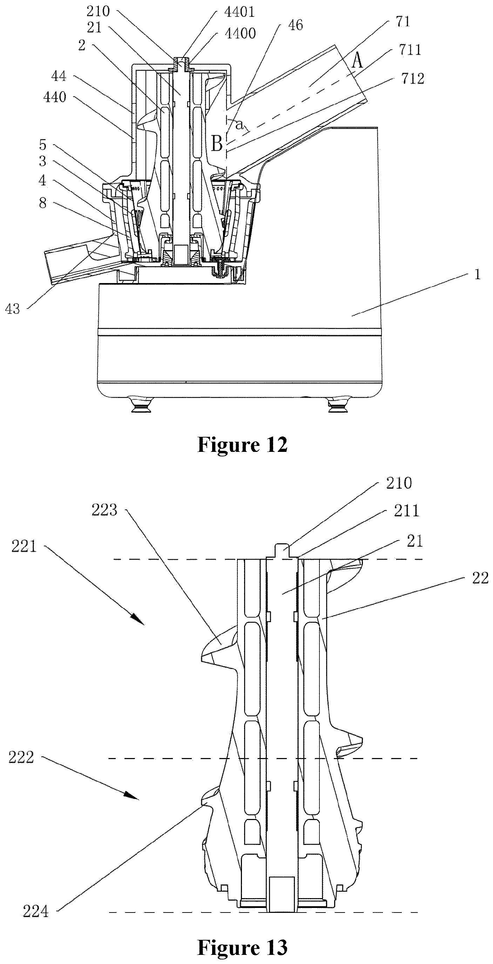

As shown in Figures 12 and 13, a sixth embodiment of the rapid and automatic feeding juicer according to the present application includes a base 1, a motor (not illustrated) arranged in the base, a squeezing screw rod 2, and a crushing assembly cooperating with the squeezing screw rod 2 to squeeze a material. The crushing assembly includes a crushing chamber 4, a squeezing cylinder 3, a filtering portion 5, and a rotating brush assembly 8. The crushing chamber 4 is mounted on the base 1, the squeezing cylinder 3 is sleeved on the squeezing screw rod 2, and the rotating brush assembly 8 is sleeved on the squeezing cylinder 3, and is configured to clean the filtering portions 5. The squeezing screw rod 2, the squeezing cylinder 3 and the rotating brush assembly 8 are concentric and are inserted into the crushing chamber 4. The crushing chamber 4 includes a crushing chamber body 43 and a crushing chamber upper cover 44, and the squeezing screw rod 2 is mounted in the crushing chamber 4. The squeezing screw rod 2 includes a material propelling portion 221 and a squeezing portion 222. The crushing chamber upper cover 44 is provided with a receiving portion 440, the receiving portion 440 has an internal part protruding upwards and is configured to receive an upper part of the squeezing screw rod 2. A side wall of the receiving portion 440 is provided with a feeding opening 46 and a feeding channel 71 connected to the feeding opening 46, and the material propelling portion 221 is arranged corresponding to the feeding opening 46 of the receiving portion 440. The provision of the receiving portion 440 enlarges a receiving space for the material, and the material can enter into the receiving portion 440 under the action of gravity after passing through the feeding channel 71, thus ensuring that there is sufficient material in the receiving portion 440 to cooperate with the material propelling portion 221 of the squeezing screw rod 2 to be primarily crushed. A receiving space of the receiving portion 440 is arranged in the direction of gravity, thus facilitating conveying the material, and allowing the feeding to be more convenient, smooth and have a small resistance. Since the squeezing screw rod 2 includes the material propelling portion 221 and the squeezing portion 222, and the squeezing screw rod 2 has a part disposed in the receiving portion 440 of the crushing chamber upper cover and a part disposed in the crushing chamber body 43, thus the structure of the juicer is more reasonable, and the mounting, detaching and cleaning of the squeezing screw rod 2, the crushing chamber upper cover 44 and the crushing chamber body 43 are facilitated. The crushing chamber body 43 and the receiving portion 440 of the crushing chamber upper cover 44 are both used to receive the squeezing screw rod 2, thus the crushing chamber body 43 and the receiving portion 440 will not have excessive depths, and a dead corner in cleaning is not apt to be formed, thereby achieving the purpose that the juicer is easy to clean.

The side wall of the receiving portion 440 is provided with the feeding opening 46 and the feeding channel 71 connected to the feeding opening 46, the feeding channel 71 includes an upper end opening 711 and a lower end opening 712, and the lower end opening 712 is connected to the feeding opening 46. Geometrical centers of two end openings of the feeding channel 71 are respectively A and B, and their connecting line is AB, an included angle between the line AB and a vertical plane is a, and 30 degrees≤a≤60 degrees. In this embodiment, a=45 degrees, and in this case, the material can most easily pass through the feeding channel 71 rapidly and can be exactly plunged into a propelling spiral 223 to be pre-crushed, and the crushing effect is good.

The material forms the same included angle with respect to a central axis of the squeezing screw rod 2, which is equivalent to feed the material obliquely, thus the material can rapidly pass through the feeding channel 71 and directly enter the receiving portion 440 by its own gravity, and can be rapidly brought into a juice extracting clearance formed between the squeezing portion 222 of the squeezing screw rod 2 and the crushing chamber 4 under the downward guiding action of the material propelling portion 221 at a position corresponding to the feeding opening 46, to be squeezed, thus easily achieving rapid and automatic feeding. Further, the feeding channel 71 arranged obliquely is lengthened with respect to a pipe vertically arranged, thus effectively preventing the hand of a person from extending into the feeding channel too deep, and enabling the juicer to have a higher safety, a simple structure and be easy to manufacture.

Under the action of its own gravity and the included angle a, the material can rapidly fall into the lower end opening 712 and be plunged into the propelling spiral 223, thus achieving a rapid and efficient primary crushing. Then, the primarily crushed material is rapidly brought into the clearance formed between the squeezing portion 222 and the crushing chamber 4 by the propelling spiral 223 rotating downwards, to be crushed for the second time and be squeezed and to extract juice, thus improving the juice extraction efficiency and juice extraction rate of the juicer. Further, the overall appearance and shape of the juicer are optimized, and also an impact force of the material to the squeezing screw rod 2, caused when the material passes through the lower end opening of the feeding channel 71 to enter the material propelling portion 221, is resolved in an axial direction and a horizontal direction, thus reducing abrasion to the crushing chamber upper cover, and also, the squeezing force of the material to the squeezing screw rod in its spiral direction is reduced, which reduces the torque of the motor, and effectively reduces the load of the motor. Thereby, not only the feeding is more smooth, but also the motor can operate more stably and has a long service life.

The material propelling portion 221 is configured to guide the material downwards, and is arranged corresponding to the feeding opening of the receiving portion 440, to allow the material to enter the receiving portion 440 of the crushing chamber upper cover 44 under the actions of its own gravity and the included angle between the feeding channel and the vertical plane, and the material propelling portion 221 of the squeezing screw rod 2 located in the receiving portion 440 guides the material downwards.

The material propelling portion 221 further includes the propelling spiral 223 arranged on the screw rod body 22, and the screw rod body 22 located at the material propelling portion 221 is in a cylindrical shape, thus allowing the material to be more easily guided into the material propelling portion 221 of the squeezing screw rod 2, to be pre-crushed, and the crushing effect is good. The material is snapped by the propelling spiral 223 and is rapidly brought into a clearance formed between the squeezing portion 222 and the squeezing cylinder 3 under the action of the propelling spiral 223, to be squeezed to extract juice, thus achieving rapid and automatic feeding and squeezing juice out of the material, and improving the juice extraction efficiency and juice extraction rate of the juicer. The feeding channel 71 is in the shape of a straight cylinder, which allows the feeding opening 46 corresponding to the feeding channel 71 to have a cross section with a maximum equivalent diameter and to be adapted to various sized materials, also allows the material to more easily enter the receiving portion 440 along an inner wall of the feeding channel 71 to be squeezed. In addition, an upper end of the screw rod body 22 is in a cylindrical shape, and the receiving portion 440 corresponding to the screw rod body 22 is in the shape of a straight cylinder, and a certain clearance is provided between the material propelling portion 221 of the squeezing screw rod 2 and the receiving portion 440, thus, during the rotating process, the squeezing screw rod 2 would not rub against an inner wall of the receiving portion 440. The inner wall of the receiving portion 440 is provided with squeezing ribs, the squeezing ribs have a blocking effect to the material when the material is primarily crushed, to prevent the material from spinning in the receiving portion 440 when the material is brought by the rotating squeezing screw rod 2 into the propelling spiral 223 to be primarily crushed, and allow the material to be snapped along the propelling spiral 223 under the blocking effect of the squeezing ribs. Then, the primarily crushed material is rapidly brought into the clearance formed between the squeezing portion 222 and the squeezing cylinder 3 by the propelling spiral 223 rotating downward, to be crushed for the second time and be squeezed to extract juice. A ratio of a height of the receiving portion 222 to an equivalent diameter of the receiving portion 440 ranges from 4/5 to 13/5. In the case that the ratio is less than 4/5, there will be no sufficient space for receiving the material propelling portion 221 on the premise of meeting the requirements of the appearance, structure or shape of the whole machine. In the case that the ratio is greater than 13/5, when the material enters into the material propelling portion 221 through the feeding channel, it does not facilitate nipping and primarily crushing the material, and the propelling spiral 223 cannot rapidly and effectively snap the material and push it downwards to be squeezed. In this embodiment, the ratio of the height of the receiving portion 440 to the equivalent diameter of the receiving portion 440 is 32/23, the height of the receiving portion is 64mm, and the equivalent diameter of the receiving portion is 46mm, thus ensuring that the squeezing screw rod 2 and the material being pushed downwards can be received, and achieving rapid squeezing and extracting juice, and improving the juice extraction efficiency of the juicer.

A ratio of an equivalent diameter of the feeding opening 46 to the equivalent diameter of the receiving portion ranges from 2/3 to 4/3, the equivalent diameter of the feeding opening 46 ranges from 40mm to 45mm, and the equivalent diameter of the receiving portion 440 ranges from 41mm to 46mm. In the case that the equivalent diameter of the feeding opening 46 is less than 40mm, though safety regulations are fulfilled, the feeding opening is too small, and the fruits and vegetables are required to be cut into very small pieces to pass through the feeding channel to be squeezed, which does not facilitate operating the juicer for the user, and reduces the juice extraction efficiency In the case that the equivalent diameter of the feeding opening 46 is greater than 45mm, it is required to additionally provide safety protection measures to achieve feeding through an opening having a large diameter In this embodiment, the ratio of the equivalent diameter of the feeding opening to the equivalent diameter of the receiving portion is 45/46. The equivalent diameter of the feeding opening is 45mm, and correspondingly, the diameter of the upper end opening of the feeding channel is also 45mm, and the equivalent diameter of the receiving portion 440 is 46mm. In this way, not only the safety regulations and standards are fulfilled, but also rapid feeding can be achieved. When a user uses a juicer, due to the limitation of the diameter of the feeding opening, his finger will not touch the rotating squeezing screw rod 2, thus avoiding an occurrence of mechanical hazards, and ensuring the safety of the user in using the juicer.

An upper end of the squeezing screw rod 2 is further provided with a top end surface cooperating with a top wall of the receiving portion 440, and an upper rotating shaft 210 is provided on the top end surface. A center of the inner top wall of the receiving portion 440 is provided with a rotating plug 4400, and the rotating plug 4400 is provided with a rotating shaft hole 4401 configured to receive the upper rotating shaft 210. After the squeezing screw rod 2 is assembled, the upper rotating shaft 210 is inserted into the rotating shaft hole 4401, to be in clearance fit with the rotating shaft hole 4401 in a radial direction, to limit the position of the rotating squeezing screw rod 2 in the radial direction during the operation of the juicer, and prevent the squeezing screw rod 2 from radially swinging in the crushing process.

An upper end of the screw rod shaft 21 protrudes from an upper end surface of the squeezing screw rod 2, to allow a rotating shaft positioning step 211 to be formed between the upper rotating shaft 210 and the squeezing screw rod 2. The squeezing screw rod 2 cooperates with the inner top wall of the receiving portion 440 by means of the rotating shaft positioning step 211, to limit the position of the rotating squeezing screw rod 2 in an axial direction during the operation of the juicer. The squeezing screw rod 2 generates a downward acting force to the material along the spiral direction of the propelling spiral 223, and meanwhile, is subjected to an upward reacting force from the material. At this time, the squeezing screw rod 2 cooperates with the top wall of the receiving portion 440 by the top end surface of the squeezing screw rod 2, to limit the position of the squeezing screw rod 2 axially, thereby preventing the squeezing screw rod from moving axially when subjected to the upward acting force from the material, ensuring that an effective crushing clearance can be formed between the squeezing portion 222 and the crushing chamber to achieve squeezing and extracting juice. Further, the crushed fruit and vegetable residue can be prevented from entering the bottom of the squeezing screw rod 2 to cause residue clogging phenomenon, thereby preventing the fruit and vegetable residue from pushing the squeezing screw rod upwards, to protect the crushing chamber upper cover, and avoid damage to the crushing chamber upper cover due to stress concentration, and prolonging the service life of the juicer. In addition, by providing the rotating shaft positioning step, the contact area between the squeezing screw rod 2 and the top wall of the receiving portion is reduced, thus effectively reducing the friction force between the squeezing screw rod and the receiving portion, and reducing abrasion to the squeezing screw rod and the crushing chamber upper cover during the extracting juice process. Further, the material of the screw rod shaft 21 is metal, preferably is a stainless steel, thus reducing the friction force between the screw rod shaft and the receiving portion 440 and reducing abrasions.

A lower end of the crushing chamber upper cover 44 cooperates with an upper end of the crushing chamber body 43. An inner side wall of the upper end of the crushing chamber body 43 is provided with a fastener, and the lower end of the crushing chamber upper cover 44 extends downwards to form an annular surrounding edge. A side wall of the annular surrounding edge is provided with a retaining groove, and the fastener is screwed into the retaining groove, to fix the crushing chamber upper cover 44 onto the crushing chamber The crushing chamber upper cover 44 cooperates with the crushing chamber body 43 by screwing the fastener into the retaining groove, to allow the crushing chamber upper cover 44 and the crushing chamber body 43 to be connected stably and reliably, and be easy to mount, detach and clean. The lower end of the crushing chamber upper cover 44 extends downwards to form the annular surrounding edge, and by providing the annular surrounding edge, a cooperating area between the crushing chamber upper cover 44 and the crushing chamber body 43 is increased, which prevents the crushing chamber and the crushing chamber upper cover from swinging radially when cooperating with the squeezing screw rod to squeeze and crush the material, and also reduces swinging of the whole juicer during operation, to allow the crushing chamber upper cover 44 and the crushing chamber body 43 to be connected more reliably, and to prolong the service life of the juice extracting components.

It may be appreciated that, the value of the included angle a may be 35 degrees, 40 degrees, 50 degrees, 55 degrees, or 60 degrees.

It may be appreciated that, the value of the equivalent diameter of the feeding opening may be 40mm, 41mm, 42mm, 43mm or 44mm, and the value of the equivalent diameter of the receiving portion may be 41mm, 42mm, 43mm, 44mm or 45mm.

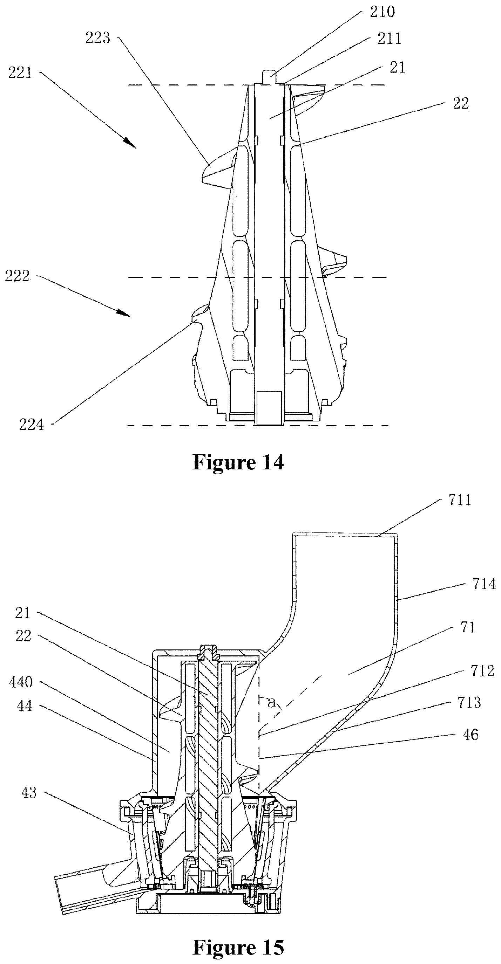

It may be appreciated that, as shown in Figure 14, the squeezing screw rod body is the shape of a circular truncated cone with a small upper part and a large lower part.

It may be appreciated that, the feeding channel is a bent round tube, a straight elliptic tube or a bent elliptic tube.

It may be appreciated that, the center of the top wall of the receiving portion is provided with an upper rotating shaft, and the upper end of the squeezing screw rod is provided with a rotating shaft hole configured to receive the upper rotating shaft.

### Seventh Embodiment

As shown in Figure 15, unlike the sixth embodiment, in this embodiment, the feeding channel 71 includes a connecting segment 713 and a feeding segment 714, and the connecting segment 713 and the feeding segment 714 are each in the shape of a straight cylinder. An included angle between a center line of the connecting segment 713 and a vertical plane is a, and 30 degrees≤a≤60 degrees. The connecting segment 713 has one end connected to the feeding opening 46 and another end smoothly connected to the feeding segment 714. The feeding segment 714 is vertically arranged. The feeding segment 714 has an upper end opening 711 configured to feed the material and another end smoothly connected to the connecting segment 713.

The feeding segment 714 is vertically arranged, to allow the upper end opening 711 of the feeding segment 714 to be in a horizontal position, thus, the material can be fed in a vertical direction, which is more adapted to the operation custom of the user, and enables the material to fall more rapidly and smoothly. The feeding segment 714 is smoothly connected to the connecting segment 713, thus, when the user feeds the material, the material can smoothly enter into the connecting segment 713 after passing through the vertical feeding segment 714, and is not apt to be stuck. In addition, the smooth connection between the feeding segment 714 and the connecting segment 713 enables the juicer to have a more aesthetic appearance. The material smoothly passes through the feeding opening 46 along the connecting segment 713 of the feeding passage 71, and enters into the material propelling portion 221, and is rapidly brought by the propelling spiral 223 into the clearance formed between the squeezing portion 222 and the crushing chamber 4, to be squeezed and extract juice, thus improving the juice extraction efficiency

The included angle between the center line of the connecting segment 713 and the vertical plane is a, and 30 degrees≤a≤60 degrees. In the case that the included angle a is less than 30 degrees, though the material can fall rapidly, the material is close to the center of the squeezing screw rod 2 when reaching the lower end opening, and the squeezing screw rod 2 has a low rotational speed and is subjected to a large torque at the center, thus not facilitating nipping and pre-crushing the material. In the case that the included angle a is greater than 60 degrees, the connecting segment 713 of the feeding channel 71 is too gentle, and the material generates a large friction against an inner wall of the connecting segment, and is apt to be stuck at the joint between the feeding segment 714 and the connecting segment 713, which is not good for rapid feeding and reduces the juice extraction efficiency In this embodiment, a=45 degrees, and in this case, the material can most easily pass through the connecting segment rapidly and be exactly plunged into the propelling spiral 223 to be pre-crushed, and the crushing effect is good.

### Eighth Embodiment

Unlike the sixth embodiment, in this embodiment, the feeding channel includes a connecting segment and a feeding segment, and the connecting segment and the feeding segment are each in the shape of a straight cylinder. An included angle between a center line of the connecting segment and a vertical plane is a, and 30 degrees≤a≤60 degrees. The connecting segment has one end connected to the feeding opening and another end smoothly connected to the feeding segment. The feeding segment is vertically arranged. The feeding segment has an upper end opening configured to feed the material and another end smoothly connected to the connecting segment.

The feeding segment is vertically arranged, to allow the upper end opening of the feeding segment to be in a horizontal position, thus, the material can be fed in a vertical direction, which is more adapted to the operation custom of the user, enables the material to fall more rapidly and smoothly The feeding segment is smoothly connected to the connecting segment, thus, when the user feeds a material, the material can smoothly enter the connecting segment after passing through the vertical feeding segment, thus is not apt to be stuck. In addition, the smooth connection between the feeding segment and the connecting segment enables the juicer to have a more aesthetic appearance. The material smoothly passes through the feeding opening along the connecting segment of the feeding passage, and enters the material propelling portion, and is rapidly brought by the propelling spiral into the clearance formed between the squeezing portion and the crushing chamber, to be squeezed and extract juice, thus improving the juice extraction efficiency.

The included angle between the center line of the connecting segment and the vertical plane is a, and 30 degrees≤a≤60 degrees. In the case that the included angle a is less than 30 degrees, though the material can fall rapidly, the material is close to the center of the squeezing screw rod when reaching the lower end opening, and the squeezing screw rod has a low rotational speed and is subjected to a large torque at the center, thus not facilitating nipping and pre-crushing the material. In the case that the included angle a is greater than 60 degrees, the connecting segment of the feeding channel is too gentle, and the material generates a large friction against an inner wall of the connecting segment, and is apt to be stuck at the joint between the feeding segment and the connecting segment, which is not good for rapid feeding and reduces the juice extraction efficiency. In this embodiment, a=45 degrees, and in this case, the material can most easily pass through the connecting segment rapidly and be exactly plunged into the propelling spiral to be pre-crushed, and the crushing effect is good.

An equivalent diameter of the feeding opening ranges from 40mm to 45mm, and the receiving portion in the shape of a straight cylinder, an equivalent diameter of the receiving portion ranges from 41mm to 46mm. In the case that the equivalent diameter of the feeding opening is less than 40mm, though safety regulations are fulfilled, the feeding opening is too small, and the fruits and vegetables are required to be cut into very small pieces to pass through the feeding channel to be squeezed, which does not facilitate operating the juicer for the user, and reduces the juice extraction efficiency. In the case that the equivalent diameter of the feeding opening is greater than 45mm, it is required to additionally provide safety protection measures to achieve feeding through an opening having a large diameter. In this embodiment, an equivalent diameter of the feeding opening is 45mm, and correspondingly, a diameter of the upper end opening of the feeding channel is also 45mm, and an equivalent diameter of the receiving portion is 46mm. In this way, not only the safety regulations and standards are fulfilled, but also rapid feeding can be achieved. When a user uses a juicer, due to the limitation of the diameter of the feeding opening, his finger will not touch the rotating squeezing screw rod, thus avoiding an occurrence of mechanical hazards, and ensuring the safety of the user in using the juicer.

It may be appreciated that, the receiving portion is in the shape of a taper cylinder with a small upper part and a large lower part.

### Ninth Embodiment

Unlike the sixth embodiment, in this embodiment, the receiving portion is the shape of a taper cylinder with a small upper part and a large lower part, to allow a certain clearance to be formed between the material propelling portion of the squeezing screw rod and the receiving portion, thus during the rotating process, the squeezing screw rod will not rub against the inner wall of the receiving portion. Further, the receiving portion is in the shape of the taper cylinder with a small upper part and a large lower part, thus providing a sufficient receiving space for the material, and the receiving space is arranged in the direction of gravity, thus more facilitating receiving the material and feeding the material. The inner wall of the receiving portion is provided with squeezing ribs, and the squeezing ribs have a blocking effect to the material when the material is primarily crushed after entering into the material propelling portion, to prevent the material from spinning in the receiving portion when the material is brought by the rotating squeezing screw rod into the propelling spiral to be primarily crushed, and the material is snapped along the propelling spiral under the blocking effect of the squeezing ribs. Then, the primarily crushed material is rapidly brought into the clearance formed between the squeezing portion and the crushing chamber by the propelling spiral rotating downward, to be crushed for the second time and be squeezed to extract juice.

### Tenth Embodiment

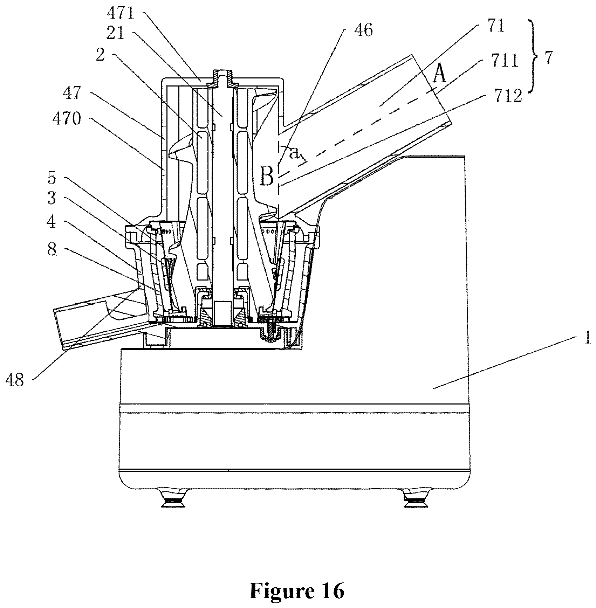

A tenth embodiment of the rapid and automatic feeding juicer according to the present application, as shown in Figure 16, includes a base 1, a motor arranged in the base (not illustrated), a squeezing screw rod 2, a crushing assembly cooperating with the squeezing screw rod 2 to squeeze a material, and a feeding assembly 7. The crushing assembly includes a crushing chamber 4 mounted on the base. The crushing chamber 4 is provided with a juice outlet and a residue outlet, and the squeezing screw rod 2 is mounted in the crushing chamber. The squeezing screw rod 2 includes a material propelling portion 221 and a squeezing portion 222. Specifically, the crushing chamber 4 includes an upper crushing chamber 47 configured to receive the material propelling portion and a lower crushing chamber 48 configured to receive a squeezing and grinding part, and the upper crushing chamber 47 and the lower crushing chamber 48 are detachably connected. The upper crushing chamber 47 includes an upper crushing chamber body 470 and a crushing chamber upper cover 471. A ratio of an equivalent diameter of the feeding opening 46 to an equivalent diameter of the upper crushing chamber body 470 ranges from 2/3 to 4/3. In this way, not only the feeding opening can be made sufficiently large to meet the requirement of the user feeding a whole fruit into the juicer to extract juice, but also the lower end opening formed by a joining portion between the feeding channel and the upper crushing chamber body can be arranged exactly corresponding to the propelling spiral of the squeezing screw rod. In the case that the equivalent diameter of the feeding opening is too small, the requirement of extracting juice with a whole fruit cannot be sufficiently met. In the case that the equivalent diameter of the feeding opening is too large, the material is apt to be stuck in the upper crushing chamber body after passing through the lower end opening, and cannot enter into the propelling spiral to extract juice, and if the feeding channel has a too large diameter, it may adversely affect the overall appearance and shape of the juicer.

The upper crushing chamber 47 and the lower crushing chamber 48 are detachably connected, such arrangement has the following advantages, the structure of the juicer is more reasonable, and the assembling, dissembling and cleaning of the squeezing screw rod 2, the upper crushing chamber 47 and the lower crushing chamber 48 are convenient. The upper crushing chamber 47 and the lower crushing chamber 48 are together used to receive the squeezing screw rod 2, thus the upper crushing chamber 47 and the lower crushing chamber 48 would have an excessive depth, and cleaning dead corners are not apt to occur, thus achieving the purpose of easy cleaning of the juicer. When assembling the juicer, a user may place the squeezing screw rod 2 in the lower crushing chamber 48, and since the lower crushing chamber 48 has a height smaller than that of the squeezing screw rod 2, the squeezing screw rod 2 can be easily mounted in the lower crushing chamber 48. The upper crushing chamber 47 can not only seal an upper end opening of the lower crushing chamber 48, to separate the squeezing screw rod 2 from the outside and ensure the safety of the user in using the juicer, but also receive the material propelling portion 221 of the squeezing screw rod, to enlarge the receiving space for the material. The material, after passing through the feeding channel, enters an upper crushing chamber body 470 under the action of gravity, thus ensuring that there is sufficient material in the upper crushing chamber body 470 to cooperate with the material propelling portion 221 of the squeezing screw rod 2, to be primarily crushed. The receiving space of the upper crushing chamber 47 is arranged in the direction of gravity, thus facilitating conveying the material, and allowing feeding to be more convenient, smooth and have a less resistance.

The feeding opening 46 and the feeding channel 71 are arranged in a side wall of the upper crushing chamber body 470, and an included angle a between a connecting line of geometrical centers of two end openings of the feeding channel 71 and a vertical plane meets the condition of 30 degrees≤a≤60 degrees, to allow the material to form the same included angle with respect to a central axis of the squeezing screw rod 2, which is equivalent to place the material obliquely. Thus, the material can rapidly pass through the feeding channel 71 and directly enter the upper crushing chamber body 470 by its own gravity, and can be rapidly brought into a juice extracting clearance formed between the squeezing portion 222 of the squeezing screw rod 2 and the lower crushing chamber 448 under the downward guiding action of the material propelling portion 221 at a position corresponding to the feeding opening 46, to be squeezed, thus easily achieving rapid and automatic feeding. In the case that the included angle a is less than 30 degrees, though the material can fall rapidly, the material is close to the center of the squeezing screw rod 2 when reaching the lower end opening, and the squeezing screw rod 2 has a low rotational speed and is subjected to a large torque at the center, thus not facilitating nipping and primarily crushing the material. In the case that the included angle a is greater than 60 degrees, the feeding channel is too gentle, and the material generates a large friction against the feeding channel 71, which is not good for rapid feeding, and reduces the juice extraction efficiency. Further, the feeding channel 71 arranged obliquely is lengthened with respect to a pipe vertically arranged, thus effectively preventing the hand of a person from extending into the feeding channel too deep, and enabling the juicer to have a higher safety, a simple structure and be easy to process. In this embodiment, a=45 degrees, and in this case, the material can most easily pass through the feeding channel 71 rapidly and be exactly plunged into the propelling spiral to be primarily crushed, and the crushing effect is good.

In addition, since the feeding opening 46 is arranged in the side wall of the upper crushing chamber body 470, the size of the diameter of the feeding opening and the position of the feeding opening are not affected by the size of the diameters of the squeezing screw rod 2 and the upper crushing chamber 47, thereby easily achieving feeding through an opening having a large diameter. In the case that the feeding opening 46 is embodied as an opening having a large diameter, since the included angle a is formed between the connecting line of the geometric centers of the two end openings of the feeding channel 71 and the vertical plane, an impact force of the material to the squeezing screw rod 2 is resolved into an axial force and a horizontal force. Thus, a squeezing force of the material to the squeezing screw rod 2 in its spiral direction is reduced, which reduces the torque of the motor, and effectively reduces the load of the motor. Thereby, not only the feeding is more smooth, but also the motor can operate stably and has a long service life.

The material propelling portion 221 of the squeezing screw rod 2 guides the material downwards, and the material propelling portion 221 is a propelling spiral 223 arranged on the squeezing screw rod body. The propelling spiral 223 snaps the material to primarily crush the material, and then the material is rapidly brought along the propelling spiral 223 into the clearance formed between the squeezing portion 222 and the lower crushing chamber 48 to be squeezed to extract juice. A ratio of a screw pitch of the propelling spiral 223 to an equivalent diameter of the feeding opening ranges from 1/2 to 3/2. In the case that the ratio of the screw pitch of the propelling spiral 223 to the equivalent diameter of the feeding opening is less than 1/2, the material cannot smoothly enter into the propelling spiral after passing through the feeding channel, further, a relatively small screw pitch may cause that the material cannot be rapidly brought into the squeezing portion 222, thus adversely affecting juice extraction efficiency. In the case that the ratio is greater than 3/2, the material is small relative to the screw pitch, and is not easy to be snapped, thus the purpose of pre-crushing cannot be achieved. In this embodiment, the ratio of the screw pitch of the propelling spiral to the equivalent diameter of the feeding opening is 1/1, the screw pitch of the propelling spiral 223 is 45mm, and the equivalent diameter of the feeding opening is 45mm, and in this case, the material can smoothly enter into the propelling spiral 223 after passing through the feeding channel, and can be snapped by the propelling spiral 223 and brought downwards along the propelling spiral into the clearance formed between the squeezing portion 222 and the lower crushing chamber 48, to be squeezed to extract juice, thus achieving rapid juice extracting.

The feeding channel 71 is in the shape of a straight cylinder, thus, the feeding opening corresponding to the feeding channel may have a maximum cross section and be adapted to various sized materials, and achieve feeding through an opening having a large diameter, and further, the material can more easily enter into the upper crushing chamber body 470 along the inner wall of the feeding channel 71, to be crushed. The screw rod body 22 is in a cylindrical shape, or in the shape of a circular truncated cone with a small upper part and a large lower part, thus allowing the material to be more easily guided into the material propelling portion of the squeezing screw rod, to be primarily crushed, and the crushing effect is good. The material propelling portion and the squeezing and grinding part are smoothly connected, and the propelling spiral extends from an upper end of the screw rod body 22 to a lower end of the squeezing portion 222, to allow the feeding of the juicer to be more smooth. The material is snapped by the propelling spiral 223 and is rapidly brought by the propelling spiral 223 into the clearance formed between the squeezing portion 222 and the lower crushing chamber, to be squeezed to extract juice, thereby achieving rapid and automatic feeding and allowing the material to be squeezed to extract juice, and improving the juice extraction efficiency and juice extraction rate of the juicer.

The equivalent diameter of the feeding opening 46 ranges from 40mm to 45mm, and the equivalent diameter of the upper crushing chamber body 470 ranges from 41mm to 46mm. In the case that the equivalent diameter of the feeding opening 46 is less than 40mm, though safety regulations are fulfilled, the feeding opening is too small, and the fruits and vegetables are required to be cut into very small pieces to pass through the feeding channel 71 to be squeezed, which is not convenient for the user to operate the juicer, and reduces the juice extraction efficiency. In the case that the equivalent diameter of the feeding opening 46 is greater than 45mm, it is required to additionally provide safety protection measures to achieve feeding through an opening having a large diameter. In this embodiment, a ratio of the equivalent diameter of the feeding opening 46 to the equivalent diameter of the upper crushing chamber body 470 is 45/46. The equivalent diameter of the feeding opening 46 is 45mm, and correspondingly, the diameter of the upper end opening of the feeding channel is also 45mm, and the equivalent diameter of the upper crushing chamber body 470 is 46mm. In this way, not only the safety regulation standards are fulfilled, but also rapid feeding can be achieved. When a user uses a juicer, due to the limitation of the diameter of the feeding opening, his finger will not touch the rotating squeezing screw rod 2, thus avoiding an occurrence of mechanical hazards, and ensuring the safety of the user in using the juicer.

Further, the material can rapidly fall into the lower end opening and be plunged into the propelling spiral under the action of its own gravity and the included angle a, thus achieving an efficient and rapid primary crushing. Then, the primarily crushed material is rapidly brought into the clearance formed between the squeezing portion 222 and the lower crushing chamber 48 by the propelling spiral 223 rotating downwards, to be crushed and be squeezed to extract juice, thus improving the juice extraction efficiency and juice extraction rate of the juicer. Further, the overall appearance and shape of the juicer are optimized, and also an impact force of the material to the squeezing screw rod, caused when the material passes through the lower end opening of the feeding channel to enter the material propelling portion, is resolved in an axial direction and a horizontal direction to reach an optimized magnitude, thus reducing abrasion to the crushing chamber, and also, the squeezing force of the material to the squeezing screw rod in its spiral direction is reduced, which reduces the torque of the motor, and effectively reduces the load of the motor. Thereby, not only the feeding is more smooth, but also the motor can operate more stably and has a long service life.

A lower end of the upper crushing chamber 47 is provided with an annular surrounding edge, and a side wall of the annular surrounding edge is provided with a retaining groove. An inner side wall of the upper end of the lower crushing chamber 48 is provided with a fastener, and the fastener is screwed into the retaining groove, to allow the upper crushing chamber 47 and the lower crushing chamber 48 to be connected stably and reliably, and be easy to mount, detach and clean. The lower end of the upper crushing chamber 47 is provided with the annular surrounding edge, and by providing the annular surrounding edge, a cooperating area between the upper crushing chamber and the lower crushing chamber is increased, which prevents the upper crushing chamber 47 and the lower crushing chamber 48 from swinging radially when cooperating with the squeezing screw rod 2 to crush the material and squeeze the material and extract juice, and also reduces swinging of the whole juicer during operation, thereby allowing the upper crushing chamber 47 and the lower crushing chamber 48 to be connected more reliably, and prolonging the service life of the juice extracting components.

An upper end of the squeezing screw rod 2 is further provided with a top end surface cooperating with a top wall of the upper crushing chamber body 470, and an upper rotating shaft 43 is provided on the top end surface. A center of the top wall of the upper crushing chamber body 470 is provided with a rotating shaft hole 24 configured to receive the upper rotating shaft. After the squeezing screw rod 2 is assembled, the upper rotating shaft 43 is inserted into the rotating shaft hole 24, to be in clearance fit with the rotating shaft hole in a radial direction, thereby limiting the position of the rotating squeezing screw rod 2 in the radial direction during the operation of the juicer, and preventing the squeezing screw rod 2 from radially swinging in the crushing process.

A top end surface of the squeezing screw rod 2 cooperates with the top wall of the upper crushing chamber body 470, to limit the position of the rotating squeezing screw rod 2 axially during the operation of the juicer. The squeezing screw rod 2 generates a downward acting force to the material in a spiral direction of the propelling spiral 223, and meanwhile is subjected to an upward reacting force from the material. In this case, the position of the squeezing screw rod 2 is limited axially by the cooperation between the top end surface of the squeezing screw rod 2 and the top wall of the upper crushing chamber body 470, which prevents the squeezing screw rod 2 from moving axially when subjected to the upward reacting force from the material, ensures that an effective crushing clearance can be formed between the squeezing portion 222 and the crushing chamber to achieve squeezing the material to extract juice. Further, the crushed fruit and vegetable residue can be prevented from entering the bottom of the squeezing screw rod 2 to cause residue clogging phenomenon, thereby preventing the fruit and vegetable residue from pushing the squeezing screw rod upwards, to protect the upper crushing chamber, and avoid damage to the upper crushing chamber due to stress concentration, and prolonging the service life of the juicer. In addition, by providing the top end surface, the contact area between the squeezing screw rod 2 and the top wall of the upper crushing chamber body 470 is reduced, thus effectively reducing the friction force between the squeezing screw rod and the upper crushing chamber body, and reducing abrasion to the squeezing screw rod and the upper crushing chamber during the juice extracting process.

It may be appreciated that, the value of the included angle a may be 35 degrees, 40 degrees, 50 degrees, 55 degrees or 60 degrees.

It may be appreciated that, the squeezing screw rod body is in the shape of a circular truncated cone with a small upper part and a large lower part.

It may be appreciated that, the feeding channel is a straight round cylinder, a bent round tube, a straight elliptic tube or a bent elliptic tube.

It may be appreciated that, the center of the top wall of the upper crushing chamber body is provided with an upper rotating shaft, and the upper end of the squeezing screw rod is provided with a rotating shaft hole configured to receive the upper rotating shaft.

Preferred embodiments of the present application are described hereinbefore, and are not intended to limit the scope of implementation of the present application. All equivalent variations and modifications made based on the present application are covered by the scope of claims of the present application, and are not listed here in detail.

## Claims

1. A rapid and automatic feeding squeeze juicer, comprising a base, a motor and a driving unit both arranged in the base, a squeezing screw rod, a crushing assembly cooperating with the squeezing screw rod to squeeze a material, and a feeding assembly, wherein the crushing assembly is mounted on the base, the crushing assembly comprises a crushing chamber, the crushing chamber is provided with a juice outlet and a residue outlet, and the squeezing screw rod comprises a screw rod shaft and a screw rod body, the screw rod body comprises a squeezing portion, the squeezing portion is provided with a squeezing spiral, the crushing chamber is sleeved on the squeezing screw rod, and the motor is drivably connected to the screw rod shaft via a transmission mechanism, and wherein the crushing chamber is provided with a feeding opening, and the screw rod body further comprises a material propelling portion configured to guide the material downwards, the material propelling portion is arranged corresponding to the feeding opening, and the feeding assembly comprises a feeding channel connected to the feeding opening, an included angle a is formed between a connecting line of geometrical centers of two end openings of the feeding channel and a vertical plane, and 0 degree≤a≤80 degrees.

2. The rapid and automatic feeding squeeze juicer according to claim 1, wherein the feeding channel is a straight round tube, and the included angle a meets a condition that 30 degrees≤a≤60 degrees.

3. The rapid and automatic feeding squeeze juicer according to claim 1, wherein the crushing chamber comprises a crushing chamber body and a crushing chamber upper cover, and the feeding opening is arranged at an upper part of the crushing chamber body.

4. The rapid and automatic feeding squeeze juicer according to claim 1, wherein the crushing chamber comprises a crushing chamber body and a crushing chamber upper cover, and the crushing chamber upper cover is provided with a receiving portion protruding upwards and configured to receive an upper part of the squeezing screw rod, the feeding opening and the feeding channel connected to the feeding opening are arranged in a side wall of the receiving portion, and the material propelling portion is arranged corresponding to the feeding opening of the receiving portion, and a ratio of an equivalent diameter of the feeding opening to an equivalent diameter of the receiving portion ranges from 2/3 to 4/3.

5. The rapid and automatic feeding squeeze juicer according to claim 1, wherein the crushing chamber comprises an upper crushing chamber configured to receive the material propelling portion and a lower crushing chamber configured to receive the squeezing portion, the upper crushing chamber and the lower crushing chamber are detachably connected, and the upper crushing chamber comprises an upper crushing chamber body and a crushing chamber upper cover, and the feeding opening and the feeding channel connected to the feeding opening are arranged in a side wall of the upper crushing chamber body, the material propelling portion is arranged corresponding to the feeding opening of the upper crushing chamber body, and a ratio of an equivalent diameter of the feeding opening to an equivalent diameter of the upper crushing chamber body ranges from 2/3 to 4/3.

6. The rapid and automatic feeding squeeze juicer according to claim 1, wherein the material propelling portion is a propelling spiral provided on the screw rod body, and a ratio of a screw pitch of the propelling spiral to an equivalent diameter of the feeding opening ranges from 1/2 to 3/2.

7. The rapid and automatic feeding squeeze juicer according to claim 3 or 4 or 5, wherein the feeding channel comprises an upper end opening and a lower end opening, and the lower end opening is connected to the feeding opening in the crushing chamber, and a feeding channel cover is provided at the upper end opening.

8. The rapid and automatic feeding squeeze juicer according to claim 7, wherein the feeding assembly further comprises an auxiliary feeding opening arranged in the feeding channel cover and having a diameter ϕ, and ϕ≤45mm;
or,
the feeding assembly further comprises an auxiliary feeding opening arranged in the crushing chamber upper cover and having a diameter ϕ, and ϕ≤45mm.

9. The rapid and automatic feeding squeeze juicer according to claim 3 or 4, wherein the crushing chamber further comprises a crushing chamber lower cover, and the crushing chamber lower cover is integrally formed with the crushing chamber body, the residue outlet is arranged in a bottom of the crushing chamber lower cover, and the crushing chamber lower cover is provided with a juice discharging channel, the juice outlet is arranged at a lower end of the crushing chamber body, and the juice discharging channel is in communication with the juice outlet.

10. The rapid and automatic feeding squeeze juicer according to claim 5, wherein the crushing chamber upper cover is integrally formed with the upper crushing chamber body, the crushing chamber further comprises a crushing chamber lower cover, the crushing chamber lower cover is integrally formed with the lower crushing chamber, and the residue outlet is arranged in a bottom of the crushing chamber lower cover, the crushing chamber lower cover is provided with a juice discharging channel, and the juice outlet is arranged at a lower end of the lower crushing chamber, and the juice discharging channel is in communication with the juice outlet.

11. The rapid and automatic feeding squeeze juicer according to any one of claims 1 to 6, wherein the crushing assembly further comprises a squeezing cylinder, and the squeezing cylinder is arranged in a crushing chamber body, and an inner wall of the squeezing cylinder is provided with squeezing ribs cooperating with the squeezing spiral.

12. The rapid and automatic feeding squeeze juicer according to claim 11, wherein the crushing assembly further comprises a filtering portion, and the filtering portion is filtering meshes arranged in the squeezing cylinder or filtering grid bars arranged in the squeezing cylinder.
